# EUROPEAN PATENT APPLICATION

(11) **EP 3 933 599 A1**
(43) Date of publication of application: **05.01.2022**
(21) Application number: 20183250.8
(22) Date of filing: 30.06.2020
(51) Int. Cl.: G06F 11/36

(54) **MACHINE LEARNING PIPELINE**

(71) Applicant: Microsoft Technology Licensing, LLC, Redmond, WA 98052-6399 (US)
(72) Inventor: GRAYSON, Martin, Philip,, Redmond, Washington 98052-6399 (US); MORRISON, Cecily, Peregrine, Borgatti,, Redmond, Washington 98052-6399 (US)
(74) Representative: Townsend, Martyn

(57) **Abstract**

A tool for performing additional processing on a machine learning pipeline. The tool comprises: a feature extractor configured to receive intermediate pipeline data comprising at least some of the output state of one of the pipeline stages other than the last stage, and transform the intermediate pipeline data in order to derive at least one feature therefrom; and a user interface module configured to provide a user interface to a user including a control part, comprising at least a first control enabling the user to choose said at least one feature. The user interface module is configured to present the at least one feature to a user in a presentation part of the user interface.

## Description

### Background

Continuous, complex artificial intelligence agents can be built from multiple machine learning models and other algorithms that form a pipeline, taking a sequence of input data and transforming it through each component, producing an output state from each component, and an eventual pipeline end state (the output of the pipeline as a whole). Such an agent may be referred to as continuous in that the input and output states can be continuously updated (this contrasts with decision-based systems where the algorithm has a single output). Further inputs will continue to update and change the output states of the successive components in the pipeline. The pipeline end state can be used by the agent to drive the processing in a system or an end user experience.

One example is a continuous agent that uses a camera to recognize and track people moving around in a space. There may be a component to detect whereabouts there are people in the images, a subsequent component that may identify the people when their faces are visible, and one further component that can track and predict their movements between camera frame inputs.

Each component in this pipeline may use a machine learning model, or an algorithm, to process the input and produce an output for the next component, or at the end of the pipeline, produce a state predicting where all tracked people may be located.

### Summary

However, there are many scenarios where it would be useful to perform further processing on the output of a component within in the pipeline. Conventionally this would be done by an expert programmer writing and inserting bespoke additional code into his or her own pipeline in order to probe the relevant stage of the pipeline and feed out the raw data. It would be desirable to provide a more convenient means of feature extraction, which in embodiments may even be used by domain specialists who may be experts in the subject matter of the model (e.g. healthcare or behavioural science, etc.) but who do not possess expertise in programming.

According to one aspect disclosed herein, there is provided a system comprising: processing apparatus comprising one or more processing units; and memory comprising one or more memory units, wherein the memory stores software arranged to run on the processing apparatus, the software comprising a tool for performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage providing a pipeline input to the pipeline and the output state of the last stage providing a pipeline output of the pipeline. The tool comprises: a feature extractor configured to receive intermediate pipeline data comprising at least some of the output state of one of the pipeline stages other than the last stage, and transform the intermediate pipeline data in order to derive at least one feature therefrom; and a user interface module configured to provide a user interface to a user including a control part, comprising at least a first control enabling the user to choose said at least one feature. The user interface module is configured to present the at least one feature to a user in a presentation part of the user interface.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of embodiments of the present disclosure and to show how such embodiments may be put into effect, reference is made, by way of example only, to the accompanying drawings in which:
Figure 1 is a schematic block diagram of an example system comprising a machine learning pipeline and a feature identifier in accordance with embodiments disclosed herein,
Figure 2 is a schematic mock-up of a user interface in accordance with embodiments disclosed herein, and
Figure 3 is a flow chart of an example method of extracting data from a pipeline and generating one or more features based thereon.

### Detailed Description of Embodiments

As mentioned, a continuous, complex artificial intelligence agent can be built from multiple models and/or other algorithms that form a pipeline, taking a sequence of input data and transforming it through each component, producing an output state from each component, and an eventual pipeline end state. Further inputs will continue to update and change the output states of subsequent components. The component output states or the pipeline end state can be used by the agent to drive the processing in a system or an end user experience. However, there are many scenarios where it would be useful to do further processing on either the output of a component in the pipeline, or on the pipeline end state.

Consider again the example of a continuous agent that uses a camera to recognise and track people moving around in a space. There may be a component to detect where there are people in the images, a subsequent component that may identify them when their faces are visible, and one further component that can track and predict their movements between camera frame inputs. Each component in this pipeline may use a machine learning model, or an algorithm, to process the input and produce an output for the next component, or at the end of the pipeline, produce a state predicting where all tracked people may be located. An engineer testing and debugging the pipeline, or a domain specialist such as a behavioural scientist helping develop the pipeline, may wish to review the input frames and output states of all subsequent components where, say, there are more than three people in the image.

The disclosed approach introduces the idea of a pipeline feature extractor. A feature extractor can be an algorithm or a machine learning model that can perform additional processing on the output state of at least one of the components within the pipeline. In embodiments, it may be able to perform such processing one any of the pipeline component output states, or the pipeline end state, without interrupting the main processing pipeline.

For instance, in the above example, the engineer or domain specialist can use the feature extractor to evaluate the output state of the component that initially detects where people are in the image - in this case, an algorithm to count the detections. The feature extractor will then create a marker for the pipeline input. The marker allows the engineer to identify instantly in any sequence of inputs which input met the criteria of more than three people in the image, allowing them to navigate quickly between the input images to review all of the states.

In some embodiments, a marker created by a feature extractor may just be a pointer to the pipeline input, but in other embodiments it may also contain complex data. For instance in the above example, the engineer may also record the bounding boxes of each of the people in the input image.

In embodiments, the feature extractor can be applied to an existing continuous agent pipeline, without interrupting the pipeline, or altering the output states of any of the pipeline components or the pipeline end state itself. One or more feature extractors can be added to each component, or at the end of the pipeline, and in embodiments they will be invoked every time an output state is ready to be evaluated.

In embodiments, the algorithm or model for the feature extractor may be written completely independently of the pipeline components. It does not need the context of the pipeline or agent, but only to be able to receive the output state of the component it is added to. For instance in the above example, the feature extractor does not need to have access to the pipeline input image, nor need to be aware that it is used in a pipeline that enables people tracking. It simply reads the output of a component that passes a list of pixel positions representing where people were located in an image. Due to this abstraction, this also means that a feature extractor can be very simple to create and the concept of a feature extractor is highly reusable across multiple pipelines and projects.

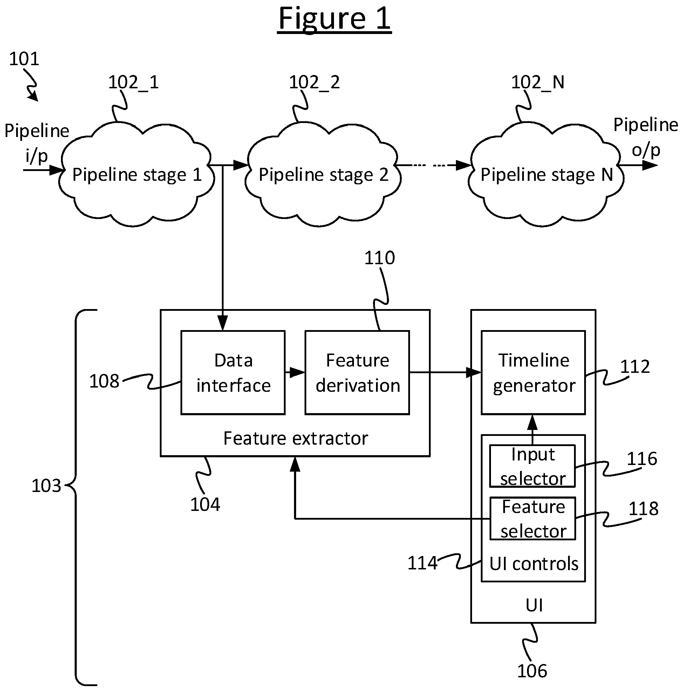

Figure 1 gives a schematic block diagram of a machine learning pipeline 101 and a tool 103 for performing additional processing on data from the machine learning pipeline 101.

The machine learning pipeline 101 comprises a plurality of pipeline stages 102_n arranged in a pipeline, n = 1.... N. In other words the pipeline stages 102 are arranged in a sequence from first to last, wherein each but the last stage 102_N in the sequence receives an input from the output of the preceding stage 102_n-1 in the sequence, with the last stage 102_N providing the output of the pipeline as a whole. Each pipeline stage 102 receives a respective input state (input data) and processes this to produce a respective output state (output data). The input state of each successive stage 102_n in the sequence (n = 2...N) comprises at least part of the output state of the preceding stage 102_n-1. The first pipeline stage 102_1 receives as its input state the input of the pipeline as a whole (the pipeline input), and the output state of the last pipeline stage 102_N provides the output of the pipeline as a whole (the pipeline output).

The pipeline 101 is implemented in software. Each pipeline stage 102 comprises a module of code stored on computer readable storage (memory) and arranged to run on processing apparatus comprising one or more processing units. The memory may comprise one or more memory units such as a hard drive or external removable storage drive. The memory may employ one or more storage media, e.g. a magnetic medium such as a magnetic disk or tape, an electronic medium such DRAM, EEPROM or flash memory, or an optical medium such as an optical disk or quartz glass. The (or each) processing unit may take any suitable form such as a general purpose central processing unit (CPU), or an accelerator processor or other form of application specific processor such as a graphics processing unit (GPU), digital signal processor (DSP), crypto-processor, or machine learning accelerator processor. The memory and processing apparatus may be implemented on one or more computer devices, e.g. one or more servers implemented at one or more geographic sites; and/or one or more user devices such as a desktop or laptop computer, handheld computer device such as a tablet or smartphone, or a wearable device such as a headset or smart watch. The different pipeline stages 102, or parts of a given stage, may be stored in the same memory unit(s) as one another or different memory units on the same or different computer devices, and may be run on the same processing unit(s) or different processing units on the same or different computer devices. Where different stages, or parts of stage, are implemented in different devices, then suitable networking techniques for achieving this will be familiar to a person skilled in the art, such as by networking together devices via a wide area network such as the Internet or a mobile cellular telephone network, or a wired or wireless local networking technology such as a Wi-Fi, Bluetooth or Ethernet, etc.

At least one of the pipeline stages 102 comprises a machine learning model. A machine learning model is a statistical model that is trained based on observed training data in order to produce a desired or expected output state for a given input state. A machine learning model may for example comprise a neural network, or another form of Bayesian probability model, or a meta learning model or clustering algorithm. E.g. in a neural network, the model comprises a network (graph) of nodes each of parameterized by one or more weights, which are gradually adapted based on the training data until the output state of the graph best fits the training data for a given set of inputs states in the training data.

In some embodiments each of the pipeline stages 102 is a respective machine learning model. Alternatively however, one or some of the pipeline stages 102 could be other forms of algorithm, e.g. an analytical algorithm such as filter that can remove data from the input should it not meet a desired threshold.

The pipeline output from the last stage 102_N in the pipeline provides the output of the pipeline as a whole (i.e. at the end of the sequence), and this may be considered the primary function of the pipeline. In addition to this, the tool 103 is configured to be able to perform further processing on data from somewhere mid pipeline (in addition to the processing performed by the pipeline 101 to produce the pipeline output, i.e. in addition to the primary function of the pipeline itself).

By way of example, the pipeline 101 may be a pipeline that is to be used in a people identification application or other image recognition application, such as in a headset to be worn by a visually impaired person, or a device that enables gesture control such as a games console or gaming peripheral. Recognition here may mean generally just recognizing the presence of a person or object, or identifying the person or object. The pipeline stages 102_1...102_N may for example comprises any one or more of: a stage that detects presence of people, a stage that detects bodies, a stage that detects faces, a stage that detects a bounding box around a person's body or face, a stage that identifies people, a stage that detects position and/or relative proportions of bones and/or joints, a stage that detects a pose of a person, and/or a stage that tracks the motion of a person. E.g. consider the headset device for the visually impaired person. In this case the pipeline input (input state to the first stage 102_1) comprises image data from one or more cameras. Stages 102_1...102_N-1 before the end of the pipeline 101 may comprise a stage which detects the presence of a person, a person's body, a person's face, or a bounding box around the detected person's body or face; and a subsequent stage which identifies the detected person from their body and/or face. The final pipeline output (the output state of the last stage 102_N) may be a 2D or 3D map indicating the positions and identities or other properties of detected people in a region around the headset. This map may be played out audibly to the wearer through headphones or the like, e.g. by playing out the name of an identified person when the wearer directs his/her face toward that person.

It will be appreciated that this is just one example and many other applications of machine learning pipelines are possible. Note also that the pipeline 101 could be implemented in the same device as the application to which it is applied (e.g. in the headset, or in the games console or peripheral, etc.) or externally in one or more other devices (such as a server), or a combination. The same may be said of the tool 103, which may be used for offline analysis or in the live experience, or both.

Wherever implemented, the tool 103 comprises a feature extractor 104 and a user interface (UI) module 106. The feature extractor 104 comprises a data interface 108 and a feature derivation module 110. The UI module 106 comprises a UI output module 112 and a UI input module 114. The UI output module 112 may for example comprise a timeline generator. The UI input module 114 may comprise an input data selector 116 and a feature selector 118.

Each of these elements 104, 106, 108, 110, 112, 114, 116, 118 is implemented in software, as a module of code stored on computer readable storage (memory) and arranged to run on processing apparatus comprising one or more processing units. Again the memory may comprise one or more memory units of any suitable form such as a hard drive or external removable storage drive; and may employ one or more storage media, e.g. a magnetic medium such as a magnetic disk or tape, an electronic medium such DRAM, EEPROM or flash memory, or an optical medium such as an optical disk or quartz glass. Each processing unit may again also take any suitable form such as a CPU, GPU, DSP, crypto-processor, machine learning accelerator processor, or any other form of general purpose or application specific processor. The memory and processing apparatus may again be implemented on one or more computer devices, e.g. one or more servers implemented at one or more geographic sites; and/or one or more user devices such as a desktop or laptop computer, handheld computer device such as a tablet or smartphone, or a wearable device such as a headset or smart watch. The different modules 104-118, or parts of a given module, may be stored in the same memory unit(s) as one another or different memory units on the same or different computer devices, and may be run on the same processing unit(s) or different processing units on the same or different computer devices.

Also, part of all of the tool 103 may be implemented on the same memory and/or processing unit(s) as some or all of the pipeline 101 or on different memory and/or processing unit(s), or a combination of these approaches. In embodiments, part or all of the tool 103 may be implemented on the same computer device(s) as some or all of the pipeline 101 or on a different device or devices, or a combination of the same and different devices. Where different stages 102 and/or modules 104-118, or parts of a given module, are implemented in different devices, then suitable networking techniques will be familiar to a person skilled in the art, such as by networking together devices via a wide area network such as the Internet or a mobile cellular telephone network, or a wired or wireless local networking technology such as a Wi-Fi, Bluetooth or Ethernet, etc.

The data interface 108 of the feature extractor 104 is arranged to receive at least part of the output state of one of the pipeline stages 102_1....102_N-1 before the last stage 102_N (Figure 1 shows it connected to the output of the first stage 102_1 but this is just one example). In other words the data interface 108 receives intermediate pipeline data from part way along the pipeline. In embodiments the data interface 108 may be capable of receiving input state comprising data of a predetermined type in a predetermined format from a pipeline stage of any of a plurality of different pipelines, as long as that pipeline stage outputs data of the predetermined type in the relevant format. E.g. the data interface may comprise an application programming interface (API) that enables different developers to plug the feature extractor 103 into their own pipeline. In some cases the feature extractor 104 may have the ability to be plugged into the middle of one pipeline or the end of another. The predetermined data type could be, for example, people count data, person identification data or bounding box data, etc.; and the format may refer to the manner in which the data is formatted in the data stream or file, or the like, supplied to the data interface. In some embodiments the interface may even be standardized. However such interoperability is not essential to all possible embodiments, and it is not excluded that in other embodiments the interface 108 could instead be a bespoke interface to the relevant pipeline stage 102_n.

The data interface 108 forwards the intermediate pipeline data which it receives to the feature derivation module 110, optionally with some initial processing such as reformatting, sorting and/or filtering or the like. The feature derivation module 110 is configured to process the received data in order to extract a feature from the data. For instance in the people recognition example, the extracted feature could be a count of the number of detected people, or an estimated percentage confidence in the recognition (likelihood of being correct). This could be derived for example from a pipeline stage that detects presence, bodies, bounding boxes around bodies or faces, or skeletons or frames of people, or such like, but before the subsequent identification or spatial mapping performed by a subsequent stage.

The UI module 106 is configured to provide a user interface (UI) to a user of the tool 103 to enable both user inputs and user outputs. The UI may comprise a graphical user interface (GUI), and/or or an audio or tactile interface (such as for visually impaired users). Note that the user for the present purposes is a user of the tool 103, who is not necessarily the user of the end device or application (such as the headset). E.g. the user of the tool 103 may not be the same as the wearer of the headset or the gamer using the games console, etc. Nonetheless in one advantageous application the user does not have to be an expert programmer, and does not have to be one of the programmers who programmed the pipeline 101. For example the user could be a behavioural scientist or medical expert (e.g. doctor) involved in developing and/or training the pipeline 101, but not necessarily programming it. Note also that the user for the present purposes could be a single individual or a team of people, e.g. a team of behavioural scientists and/or doctors.

The feature to be extracted is chosen by the user of the tool 103, via a UI control provided by the feature selector sub-module 118 of the UI module 114. For instance, in embodiments this UI control may comprise a menu of predetermined features, that enables the user to choose the desired feature to extract by selecting it from the menu. E.g. the UI control may comprise a drop down menu from which the feature can be selected. Alternatively or additionally, the user interface control may enable the user to choose the at least one feature by entering a definition of the feature, e.g. the UI control comprising an equation editor or feature builder "wizard". By whatever means chosen, the feature selector 118 communicates the chosen feature to the feature extractor 104, which in response operates to extract the chosen feature from the relevant stage 102 of the pipeline 101.

The UI output module 112 is configured to present the extracted feature to the user through the Ul, e.g. graphically. The extracted feature is output (e.g. displayed) in conjunction with at least some of the pipeline input data from which it was generated. For instance if the input data comprises an image, the extracted data may be displayed in the UI next to or overlaid on the image from which the feature was extracted. Preferably the extracted feature is output in a way that indicates a relation between the feature and the pipeline input data from which it was generated. E.g. if the input data comprises an image or some other form of spatial map/plot, then the indication of the extracted feature may be overlaid on a position of the feature in the image, or may be otherwise displayed in relation to that position such as being connected by a line or arrow, or associated with a marker symbol used to indicate the location on the image.

In some embodiments the pipeline input may comprise a plurality of different portions of data, e.g. different images, files or data sets etc., and the UI input module 114 may comprise an input selector sub-module 116 providing a further UI control enabling the user to select which input data to extract the feature in association with.

In some exemplary applications, the pipeline input may comprise series data, such as time series data. In this case the pipeline input data comprises a series of portions of data, e.g. captured from different times. For instance the different portions could be different images, such as different frames of a video or different snapshots captured at different times. This would be the case for example in the headset application.

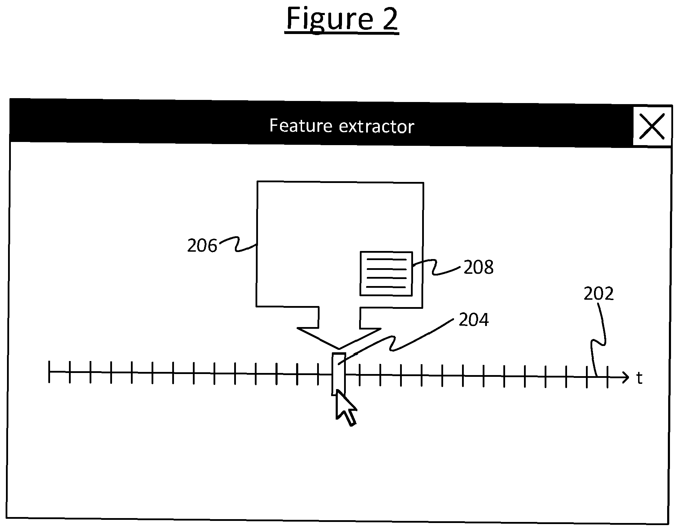

In embodiments, the UI output module 112 may comprise a timeline generator arranged to present the extracted feature to the user on a graphical timeline. This is illustrated schematically by way of example in the UI mock-up of Figure 2.

Here the UI comprises a timeline 202. The relevant portion of input data 206, with which the extracted feature 208 is associated, is displayed in association with the point on the timeline corresponding to the time of that portion of input data 206, e.g. by means of arrow or line connecting the displayed portion of input data 206 to the corresponding point on the timeline, and/or displaying a marker or slider 204 on the timeline at the relevant point. E.g. if the series data comprises frames or snaphots, the UI may show the relevant frame or snapshot as being connected to, pointing to or otherwise associated with the point on the timeline 202 corresponding to the time at which the frame or snapshot was captured. The extracted feature 208 may also be displayed in association with the input data 206 as discussed previously.

In some such embodiments, the UI control provided by the input selector 116 may enable the user to navigate back and forth along the timeline. E.g. the UI control enabling selection of the input data may comprise a slider 204 which the user can slide along the timeline 202. This could be the same UI element as used as a marker to indicate the position on the timeline of the portion of input data 206 for which the extracted feature 208 is being generated.

There are a multitude of possible applications of the disclosed tool 103. As mentioned, one possible application is in relation to a headset for the visually impaired, where the input data to the first pipeline stage 102_1 comprises a series of captured images (e.g. frames or snapshots) and the output of the final stage 102_N is a 2D or 3D map of people indicating where recognized people are, played out audibly to wearer.

The extracted feature 208 may comprise for example: a number of people detected, detection of a predetermined behaviour such as a motion or gesture of at least one person, or an indication of whether a predetermined body part can be detected. Further examples include a percentage confidence associated with detection of some aspect such as presence of a person or object, or a particular body part or pose, etc.; or an estimated number of misdetections based on one or more heuristic rules. Such features could be extracted for example from a pipeline stage 102 that detects presence of a person, or is responsible for detecting a bounding box around a person's body, or detecting a frame or skeleton of a person, or recognizing a particular body part such as a head or face.

In one example embodiment, the extracted feature may comprise a detected behaviour of a wearer of the headset. E.g. the user may be a domain specialist such as a behavioural scientist, who is helping develop or test the pipeline 101. The output of the pipeline 101 may be programmed to read out the name of a detected person in the wearer's surroundings when the wearer turns his/her face toward that person. In such an application, the domain specialist may find it useful to extract from the pipeline 101 a detection of when and/or how often the wearer of the headset moves his/her head, as this may give a valuable insight into how the wearer uses the device such as how often they move their head to update their map of their surroundings.

In another example application the pipeline 101 may be arranged as a pose detector, for instance for use in video game control. E.g. one stage 102 detects a box around each person detected in an image, then one or more further stages 102 detect position and/or relative proportions of bones, joints, head and/or face or the like; and the final stage 102_N outputs a detected pose. An example of extracting a feature from one or more intermediate stages in this case, would be to apply one or more heuristic rules to detect estimated misdetections. The heuristic rules may for example be based on one or more of: size of box relative to image, relative position and/or proportions of detected bones, and/or number of detected bones. E.g. too many or too few bones, or too large or small a box size, or unlikely proportions, may be gauged a likely misdetection.

Another example application is in healthcare where a machine learning pipeline 101 may be used to predict a trajectory of a condition of a patient or other subject. E.g. the condition may comprise anxiety or depression. In such applications, the input stage 102_1 may receive survey data and/or one or more measurements relating to the subject, and may predicts a score based on this. A subsequent stage 102 in the pipeline 101 may predict one or more future scores based on data of the subject and other subjects in the training data set. The extracted feature may for example comprise a measure of reliable change (change of greater than a predetermined amount over a predetermined period, e.g. a predetermined number of days or weeks).

As mentioned, the tool 103 can be used for either offline analysis or in the live experience. As an example of use in offline analysis, the extracted information may help the user, such as a domain specialist, to improve one or more stages 102 of the pipeline 101 for future use. For instance the domain specialist may determine, by comparing the extracted feature with the original raw image data, that the pipeline 101 is, say, overdetecting or underdetecting the number of people in the images. The domain specialist could then determine that the machine learning model of one of the pipeline stages 102 needs to be trained with additional or training data, or that it needs to have one or more parameters tuned, in order to decrease or increase sensitivity (likelihood of declaring a positive detection). In some embodiments the UI input module 114 may comprise one or more additional controls enabling the user to retrain or tune one of the pipeline stages 102, such as the stage 102 whose output the feature extractor 104 is connected to or a preceding stage.

In an example of use in the live experience, the tool 103 may be running in real-time on the pipeline 101 of the wearer's headset (either implemented in the headset itself or on an external device such as a server and connected wirelessly to the headset). In a particular example of this, the extracted feature may comprise an indication of when the headset's camera(s) can only see a part of another person's body not including their face or a sufficient view of the face for facial recognition, e.g. because it can only see a torso. This could be used to indicate to the wearer (who in this example is also the user) to look up or turn his/her head.

In some embodiments, an advantage of the tool 103 is that it does not to require the user to view the raw input data of the pipeline, for example the input video of sequence of snapshots, or medical records of individual subjects. This may be advantageous in applications where privacy is a concern, such as people tracking applications or medical applications as mentioned above. In this case the tool 103 enables the user to assess the model based on anonymized extracted features, but without requiring access to the actual input data such as the raw images or medical records, which may enable people or sensitive data to be identified.

In other embodiments, e.g. if the user is trusted or privacy is not an issue in the application in question, the user may view the raw pipeline input in conjunction with the extracted features from part way along the pipeline. This will enable the user to make a judgement about the extracted features in context of the ground-truth of the actual input data, e.g. the actual captured video frames or snapshots.

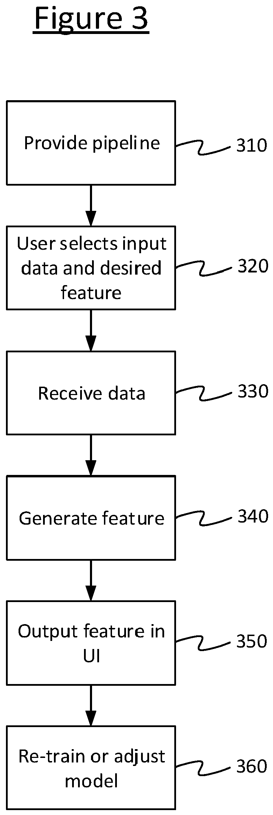

Figure 3 gives a flow chart outlining an example method in accordance with embodiments disclosed herein. Step 310 comprises providing the pipeline 101, by programming the pipeline 101 and training the machine learning stages 102 of the pipeline. This step is not required if the method begins by operating on a pre-existing pipeline 101. At step 320 the user selects the feature they desire to extract via the Ul, and optionally also selects a portion of the pipeline input data from which the extracted feature is to be generated (e.g. by navigating on a timeline 202). At step 330 the method comprises receiving data from the output state of one of the pipeline stages 102_1...102_N-1 before the last stage 102_N. At step 340 the method comprises transforming the received data to generate the selected feature. At step 350, the method comprises outputting the extracted feature to the user via the UI in association with the corresponding portion of pipeline input data. Optionally at step 360, the user may re-train or tune one or more parameters of the machine learning model of one or more of the pipeline stages 102 based on the extracted feature as presented to him/her through the UI.

It will be appreciated that the above embodiments have been described by way of example only.

More generally, according to one aspect disclosed herein, there is provided a system comprising: processing apparatus comprising one or more processing units; and memory comprising one or more memory units, wherein the memory stores software arranged to run on the processing apparatus, the software comprising a tool for performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage providing a pipeline input to the pipeline and the output state of the last stage providing a pipeline output of the pipeline; the tool comprising: a feature extractor configured to receive intermediate pipeline data comprising at least some of the output state of one of the pipeline stages other than the last stage, and transform the intermediate pipeline data in order to derive at least one feature therefrom; and a user interface module configured to provide a user interface to a user including a control part, comprising at least a first control enabling the user to choose said at least one feature; wherein the user interface module is configured to present the at least one feature to a user in a presentation part of the user interface.

In embodiments, the feature extractor may be configured to annotate the accessed portion of input data with the at least one feature, and the user interface module may be configured to present the at least one feature by presenting the annotated portion of input data to a user in a presentation part of the user interface.

In embodiments, the user interface module may be operable to present the annotated portion of data to the user without presenting the pipeline input to the user.

In embodiments, the control part of the user interface may further comprise a second control enabling the user to select said portion of input data.

In embodiments, the pipeline input may comprise series data comprising a series of different portions of input data, wherein the user interface control enables the user to select which of the portions in the series to access as said portion of data.

In embodiments, the series may be a time series, the different portions of input data comprising data associated with different respective times.

In embodiments, the presentation part of the user interface may present the different portions of data on a timeline at positions corresponding to the different respective times, and the second control enables the user to select the selected portion of input data by navigating back and forth along the timeline.

In embodiments, the timeline may be presented graphically and the second control may comprise a graphical slider on the timeline which the user can slide along the timeline to perform said navigating back and forth.

In embodiments, the user interface may comprise a graphical user interface, the presentation part comprising a display part, and the first and/or second controls comprising a graphical input mechanism.

In embodiments, the annotation may indicate a relation between the annotated portion of input data and the at least one feature.

For example, the portion of input data may comprise an image or spatial map, and the annotation may indicates a location within the image or map with which the feature is associated.

In embodiments, the tool may enables the user to re-train one or more of the pipeline stages and/or tune one or more parameters of at least one of the pipeline stages in the pipeline based on the annotated input data.

In embodiments, the feature extractor may comprise a data interface capable of receiving, for the derivation of the at least one feature, output states comprising a predetermined data type inf a predetermined format from pipeline stages of at least two alternative pipelines: the output state of said one of the pipeline stages in said machine learning pipeline, and, if instead used in another pipeline, an output state of a pipeline stage which outputs data of a same data type in a same format as said one of the pipeline stages.

In some such embodiments, said data interface may provide a standardized interface for the receipt of the output states of a class of pipeline stage comprising said one of the pipeline stages in said machine learning pipeline and said other pipeline stage in said other pipeline.

In embodiments, the pipeline may be for use in a people recognition application, wherein the pipeline input comprises image data, and the pipeline output comprises a 2D or 3D map of physical locations of the identified people.

In embodiments, the pipeline stages may comprise one or more of:
- at least one stage that detects presence of people;
- at least one stage that detects bodies,
- at least one stage that detects faces,
- at least one stage that detects a bounding box around a person's body or face,
- at least one stage that identifies people,
- at least one stage that detects position and/or relative proportions of bone and/or, joints;
- at least one stage that detects a pose of a person, and/or
- at least one stage that tracks motion of a person.

In embodiments, the at least one feature may comprises:
- a number of people detected,
- a predetermined motion or gesture of at least one person,
- an indication of whether a predetermined body part can be detected, and/or
- an estimated number of misdetections based on one or more heuristic rules.

According to another aspect disclosed herein, there may be provided a system comprising: processing apparatus comprising one or more processing units; and memory comprising one or more memory units, wherein the memory stores software arranged to run on the processing apparatus, the software comprising a tool for performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage providing a pipeline input to the pipeline and the output state of the last stage providing a pipeline output of the pipeline; the tool comprising: a feature extractor configured to receive intermediate pipeline data comprising at least some of the output state of one of the pipeline stages other than the last stage, and transform the intermediate pipeline data in order to derive at least one feature therefrom; and a user interface module configured to provide a user interface to a user including a control part, comprising at least a first control enabling the user to choose said at least one feature; wherein the feature extractor is further configured to access a portion of input data comprising at least some of the pipeline input, and to annotate the accessed portion of input data with the at least one feature, and the user interface module is configured to present the annotated portion of input data to a user in a presentation part of the user interface.

According to another aspect disclosed herein there is provided computer program product comprising the software of any embodiment disclosed herein, embodied on a computer-readable storage medium.

According to another aspect, there may be provided a computer-implemented method of performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage acting as a pipeline input to the pipeline and the output state of the last stage providing a pipeline output of the pipeline; the method comprising: providing a user interface to a user including a user interface control part, comprising at least a first control enabling the user to choose at least one feature to be extracted, receiving intermediate pipeline data comprising at least some of the output state of one of the pipeline stages other than the last stage, transforming the intermediate pipeline data in order to derive at the least one feature therefrom, and presenting the at least one feature to a user in a presentation part of the user interface.

In embodiments the method may further comprise re-training one or more of the pipeline stages and/or tuning one or more parameters of at least one of the pipeline stages based on the presentation of the at least one feature.

In embodiments, the user may comprise at least one domain specialist who is not a programmer of the machine learning pipeline. For instance the domain specialist may be a medical expert or a behavioural scientist.

Other variants or use cases of the disclosed techniques may become apparent to the person skilled in the art once given the disclosure herein. The scope of the disclosure is not limited by the described embodiments but only by the accompanying claims.

## Claims

1. A system comprising:
processing apparatus comprising one or more processing units; and
memory comprising one or more memory units, wherein the memory stores software arranged to run on the processing apparatus, the software comprising a tool for performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage providing a pipeline input to the pipeline and the output state of the last stage providing a pipeline output of the pipeline; the tool comprising:
- a feature extractor configured to receive intermediate pipeline data comprising at least some of the output state of one of the pipeline stages other than the last stage, and transform the intermediate pipeline data in order to derive at least one feature therefrom; and
- a user interface module configured to provide a user interface to a user including a control part, comprising at least a first control enabling the user to choose said at least one feature;
wherein the user interface module is configured to present the at least one feature to a user in a presentation part of the user interface.

2. The system of claim 1, wherein the feature extractor is configured to access a portion of input data comprising at least some of the pipeline input, annotate the accessed portion of input data with the at least one feature, and the user interface module is configured to present the at least one feature by presenting the annotated portion of input data to a user in a presentation part of the user interface.

3. The system of claim 2, wherein the control part of the user interface further comprises a second control enabling the user to select said portion of input data.

4. The system of claim 3, wherein the pipeline input comprises series data comprising a series of different portions of input data, wherein the user interface control enables the user to select which of the portions in the series to access as said portion of data.

5. The system of claim 4, wherein the series is a time series, the different portions of input data comprising data associated with different respective times.

6. The system of claim 5, wherein the presentation part of the user interface presents the different portions of data on a timeline at positions corresponding to the different respective times, and the second control enables the user to select the selected portion of input data by navigating back and forth along the timeline.

7. The system of claim 6, wherein the timeline is presented graphically and the second control comprises a graphical slider on the timeline which the user can slide along the timeline to perform said navigating back and forth.

8. The system of any of claims 2 to 7, wherein the annotation indicates a relation between the annotated portion of input data and the at least one feature.

9. The system of claim 8, wherein the portion of input data comprises an image or spatial map, and the annotation indicates a location within the image or map with which the feature is associated.

10. The system of any preceding claim, wherein the user interface module is operable to present the at least one feature to the user without presenting the pipeline input to the user.

11. The system of any preceding claim, wherein the user interface comprises a graphical user interface, the presentation part comprising a display part, and the first and/or second controls comprising a graphical input mechanism.

12. The system of any preceding claim, wherein the tool enables the user to re-train one or more of the pipeline stages and/or tune one or more parameters of at least one of the pipeline stages in the pipeline based on the annotated input data.

13. A computer program product comprising the software of any preceding claim embodied on a computer-readable storage medium.

14. A computer-implemented method of performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage acting as a pipeline input to the pipeline and the output state of the last stage providing a pipeline output of the pipeline; the method comprising:
- providing a user interface to a user including a user interface control part, comprising at least a first control enabling the user to choose at least one feature to be extracted,
- receiving intermediate pipeline data comprising at least some of the output state of one of the pipeline stages other than the last stage,
- transforming the intermediate pipeline data in order to derive at the least one feature therefrom, and
- presenting the at least one feature to a user in a presentation part of the user interface.

15. The method of claim 14, further comprising re-training one or more of the pipeline stages and/or tuning one or more parameters of at least one of the pipeline stages based on the presentation of the at least one feature.
